Europäisches Patentamt

European Patent Office

Office européen des brevets

(19)

(11) **EP 1 119 741 B1**

(12) **EUROPÄISCHE PATENTSCHRIFT**

(45) Veröffentlichungstag und Bekanntmachung des Hinweises auf die Patenterteilung:
**03.08.2005 Patentblatt 2005/31**

(51) Int Cl.$^7$: **G01C 21/02**, B64G 1/36, G01S 3/786, G05D 1/08

(21) Anmeldenummer: **99957853.7**

(22) Anmeldetag: **05.10.1999**

(86) Internationale Anmeldenummer:
**PCT/DE1999/003204**

(87) Internationale Veröffentlichungsnummer:
**WO 2000/022381 (20.04.2000 Gazette 2000/16)**

(54) **KOMBINIERTES ERD-STERNSENSORSYSTEM UND VERFAHREN ZUR BAHN- UND LAGEBESTIMMUNG VON RAUMFLUGKÖRPERN**

COMBINED EARTH/STAR SENSOR SYSTEM AND METHOD FOR DETERMINING THE ORBIT AND POSITION OF SPACECRAFT

SYSTEME CAPTEUR DE TERRE-STELLAIRE COMBINE ET PROCEDE DE DETERMINATION DE TRAJECTOIRE ET DE POSITION D'ENGINS SPATIAUX

(84) Benannte Vertragsstaaten:
**DE FR GB IT**

(30) Priorität: **09.10.1998 DE 19846690**

(43) Veröffentlichungstag der Anmeldung:
**01.08.2001 Patentblatt 2001/31**

(73) Patentinhaber: **EADS Astrium GmbH**
**81663 München (DE)**

(72) Erfinder:
• **DIEHL, Hermann**
**D-81827 München (DE)**
• **PLATZ, Willi**
**D-81739 München (DE)**
• **ZINNER, Helmut**
**D-85540 Haar (DE)**
• **GOTTZEIN, Evelyne**
**D-85635 Höhenkirchen (DE)**

(74) Vertreter: **Ulrich, Thomas**
**EADS Deutschland GmbH,**
**LG-PM - Patente**
**81663 München (DE)**

(56) Entgegenhaltungen:
**EP-A- 0 589 387**     **US-A- 5 189 295**

## Beschreibung

Die Erfindung betrifft ein kombiniertes Erd-Sternsensorsystem zur dreiachsigen Lagebestimmung von Satelliten im Weltraum, sowie ein Verfahren zur Bahn- und Lagebestimmung von Raumflugkörpern.

Bisher werden für Satelliten mit Erdorientierung Infrarotsensoren zur Bestimmung von Roll- und Nickwinkel und Sonnensensoren zur Bestimmung des Gierwinkels des Satelliten verwendet. Nachteile dieser Lösung sind der hohe Aufwand durch die Verwendung einer Anordnung mehrerer Sonnensensorköpfe, sowie der Wegfall der Gierreferenz bei Ko-Linearität von Erde und Sonne. Darüber hinaus ist zur Auswertung zusätzlich die genaue Kenntnis der Position des Satelliten auf seiner Umlaufbahn erforderlich. Weiterhin beeinflussen Fehler zwischen den Messachsen von Sonnen- und Erdsensoren die z.B. durch Ungenauigkeiten beim Einbau oder durch thermische Beeinflussung verursacht werden; erheblich die Qualität der Messung.

Bekannte Sternsensoren liefern eine Drei-Achsen-Lagereferenz in einem Inertialsystem. Zur Erdausrichtung ist auch hier die genaue Kenntnis der Satellitenposition erforderlich. Für derartige Stemsensoren werden heute CCDs verwendet. Wegen ihrer mangelnden Strahlungsfestigkeit ist ihre Verwendung in Bahnen mit hoher Strahlungsbelastung, z.B. für geosynchrone Missionen, nicht geeignet.

Aus der EP 0 589 387 A 1 ist ein kombiniertes Erd-Sternsensorsystem bekannt, das über eine einzige Optik sowohl die Stern- als auch die Erdbeobachtung im UV-Bereich ausführt. Zur Durchführung der gemeinsamen Beobachtung ist die Optik als ein Weitwinkel-System mit einem Spiegelsystem ausgebildet. Mit dem bekannten System können wegen den übereinstimmenden Beobachtungsrichtungen bei der Erd- und bei der Sternbeobachtung nur erdnahe Sterne und wegen der gleichzeitigen Auslegung des Sensors auf die starke Erdstrahlung nur Sterne mit hoher Intensität zur Lagebestimmung beobachtet werden.

Aus US 5,189,295 ist ein kombiniertes Erd-Sternsensorsystem zur dreiachsigen Lagebestimmung von Satelliten im Weltraum bekannt, wobei das kombinierte Erd-Sternsensorsystem getrennte Aperturen mit unterschiedlichen Beobachtungsrichtungen und gemeinsame Bildaufnehmer für den Erd- und den Stemsensor aufweist. Die Erde wird dabei teilweise durch eine Blende abgeschattet, um eine Erfassung des Polarsternes zu ermöglichen. Problematisch ist dabei jedoch, dass nur eine unzureichende Berücksichtigung der unterschiedlichen Helligkeiten von Erde und Sternen erfolgt, weshalb eine ausreichend exakte Erfassung von Erde und Sterne nicht gewährleistet ist.

Aufgabe der Erfindung ist es, ein kombiniertes Erd-Sternsensorsystem zu schaffen, das bezüglich der Auswahl der geeigneten zu beobachtenden Sterne nicht eingeschränkt und kostengünstig herstellbar ist und eine optimale Erfassung der zu beobachtenden Sterne und der Erde erlaubt. Weiterhin soll ein Verfahren zur Bahn- und Lagebestimmung eines Raumflugkörpers angegeben werden, das eine erhöhte Genauigkeit aufweist, eine optimale Erfassung der zu beobachtenden Sterne und der Erde erlaubt und Bordautonomie ermöglicht.

Diese Aufgabe wird gelöst durch das kombinierte Erd-Sternsensorsystem gemäß Patentanspruch 1 und das Verfahren gemäß Patentanspruch 5. Weitere vorteilhafte Merkmale, Aspekte und Details der Erfindung ergeben sich aus den abhängigen Ansprüchen, der Beschreibung und den Zeichnungen.

Das erfindungsgemäße kombinierte Erd-Sternsensorensystem zur dreiachsigen Lagebestimmung von Satelliten im Weltraum hat getrennte Aperturen mit unterschiedlichen Beobachtungsrichtungen und gemeinsame Bildaufnehmer für den Erd- und den Sternsensor. Der Sensor erlaubt dabei eine variable Steuerung der Belichtungszeit, so dass die Integration auf die unterschiedlichen Helligkeiten von Sternen und Erde angepasst werden kann. Vorzugsweise wird abwechselnd immer ein Frame lang und ein Frame kurz belichtet.

Durch die erfindungsgemäße Beobachtung der Erde und Sterne mit verschiedenen Aperturen können auch Sterne der Magnitude 5 bei der Beobachtung berücksichtigt werden. Der erhebliche Intensitätsunterschied dieser Sterne zur Erdstrahlung kann durch eine unterschiedliche Gestaltung der Apertur und Filterung aufgefangen werden. Trotz gleichzeitiger Beobachtung der Erde wird bei Verwendung von zwei Aperturen die Detektion der Sterne nicht durch das Streulicht der Erde beeinflusst. Der einfache Aufbau des erfindungsgemäßen Systems lässt hohe Lichtstärken bei geringen Kosten zu. Eine hohe Lichtstärke gestattet die Verwendung kostengünstiger CMOS-Bildaufnehmer.

Die CMOS-Bildaufnehmer bilden bevorzugt ein CMOS-Focal Plane Array als Fokalebenensensor mit einem Dynamikbereich von bis zu $1: 10^6$. Er erlaubt eine variable Steuerung der Belichtungszeit, so dass die Integration auf die unterschiedlichen Helligkeiten von Sternen und Erde angepasst werden kann.

Durch eine alternativ vorgeschlagene Verwendung von zwei verschiedenen Optiken statt einer gemeinsamen Optik können die zur Detektion verwendeten Wellenlängenbereiche unabhängig voneinander optimiert werden.

Das erfindungsgemäße, integrierte Sensorsystem ermöglicht die Bestimmung von drei Lagewinkeln, drei Winkelgeschwindigkeiten und der Position des Raumflugkörpers. Durch Softwaresteuerung können verschiedene Bahnen wie geosynchrone Bahnen, Transferbahnen, sowie niedrige, mittlere und elliptische Bahnen abgedeckt werden.

Das erfindungsgemäße Verfahren umfasst die Schritte:

Gleichzeitiges Abbilden von Sternen und Erdrand in einer Fokalebene eines Sensorsystems, Bestimmen der Sternposition in der Fokalebene, Bestimmen des Erdrandes durch Bildverarbeitung, Bestimmen von Drehraten des Sensorsystems aus der Bewegung des Sternenbildes in der Fokalebene und Berechnen von Bahn und/ oder Lage eines Raumflugkörpers, der das Sensorsystem trägt. Durch wechselweise Anpassung der Belichtungs- bzw. Integrationszeit des Sensors bzw. der Bildaufnehmer an die Helligkeit der Sterne und die Helligkeit der Erde können auch Sterne geringer Helligkeit gleichzeitig mit dem Erdrand erfasst werden.

Mit der Vorrichtung und dem Verfahren können Bahn und Lage des Raumflugkörpers bzw. Satelliten gleichzeitig mit hoher Genauigkeit erhalten werden.

Durch Herausfiltern bzw. Erfassen eines langwelligen Anteils der Strahlung, z. B. mittels Kantenfiltern, wird erreicht, dass der Erdrand besonders gut und stabil erfasst werden kann. Durch modellbasiertes Tracking des Erdrandes können zusätzliche Freiheitsgrade ermittelt werden.

Weitere Vorteile der Erfindung sind eine geringere Masse bzw. eine mögliche Redundanz, da weitere Geräte, wie beispielsweise Kreisel, die bisher zur Bahn- und Lagebestimmung notwendig waren, eingespart werden können. Es ergibt sich eine vereinfachte Integration und eine inhärente Strahlungsresistenz. Die Bahnbestimmung ist ohne GPS möglich, insbesondere auch für erdnahe und geostationäre Satelliten. Dadurch kann Bordautonomie erreicht werden.

Anhand der Zeichnung werden Ausführungsbeispiele der Erfindung näher erläutert.

Figur 1    zeigt ein kombiniertes Erd-Sternsensorsystem mit einer gemeinsamen Optik,

Figur 2    zeigt ein kombiniertes Erd-Sternsensorsystem mit zwei Optiken,

Figur 3    zeigt eine Anordnung von Bildaufnehmern, und

Figur 4    zeigt ein Koordinatensystem, dessen Z-Achse zum Erdmittelpunkt gerichtet ist und dessen X-Achse in Richtung der Bahnbewegung zeigt.

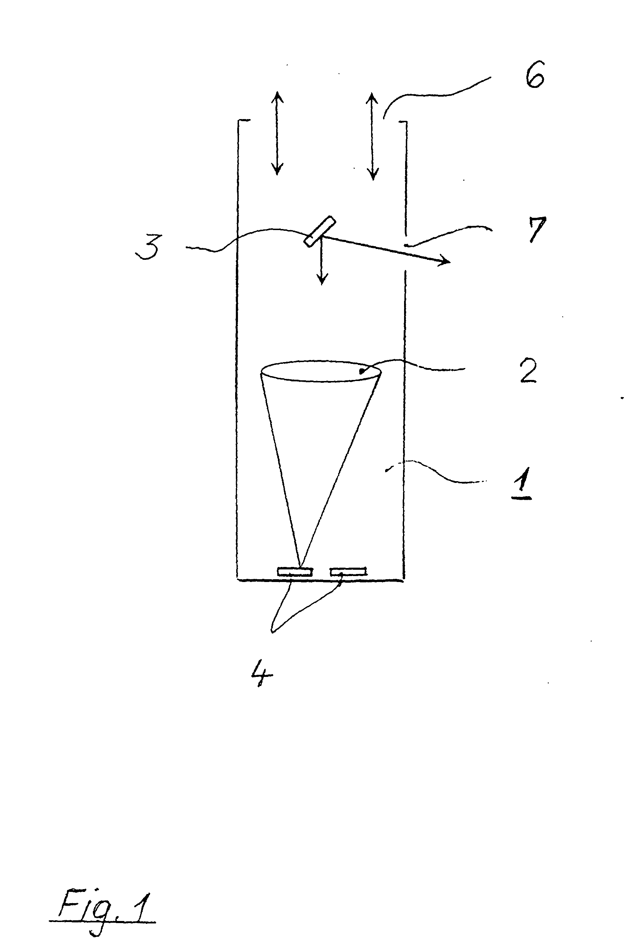

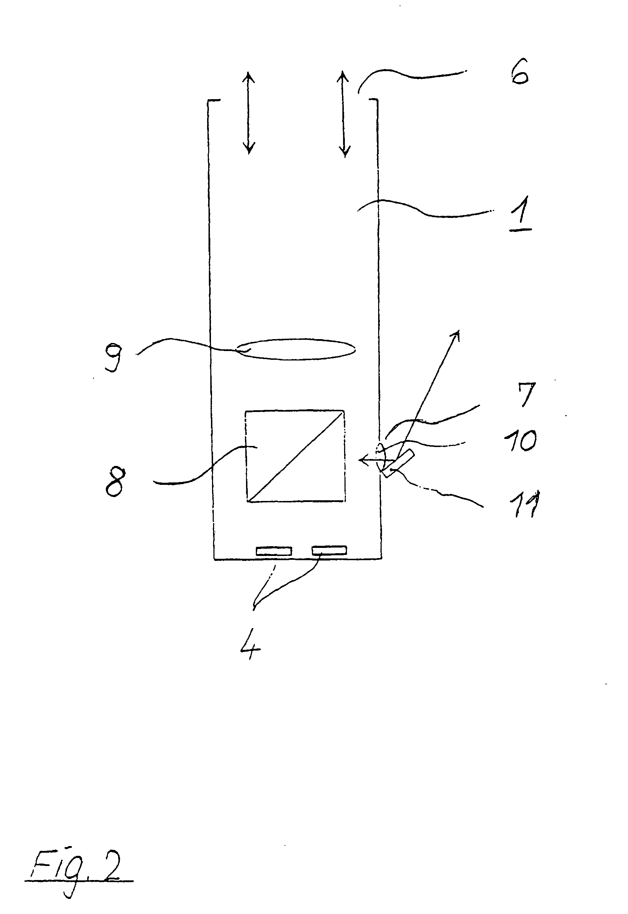

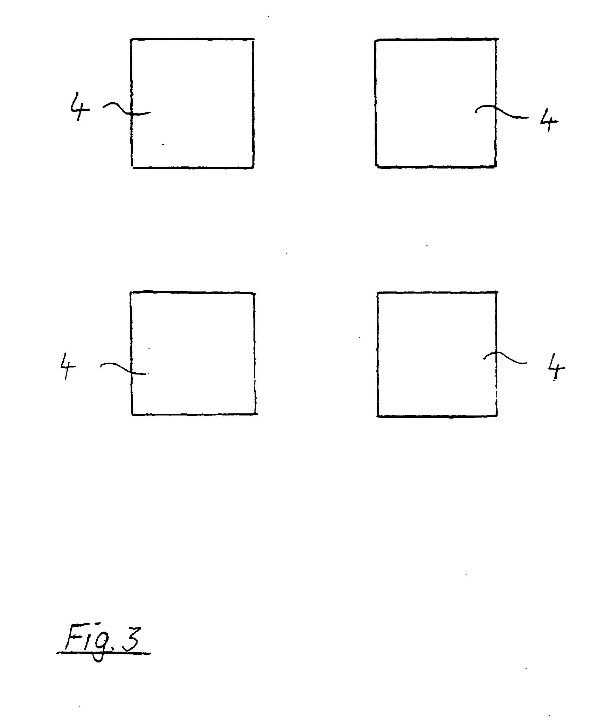

Das in Figur 1 gezeigte kombinierte Erd-Sternsensorsystem 1 besteht aus einer gemeinsamen Optik 2, einem Ablenkspiegel 3, Bildaufnehmern 4 und den Fenstern 6 und 7 zur Erd- und Stemenbeobachtung.

Das gezeigte System ist insbesondere dadurch gekennzeichnet, daß die Beobachtungsrichtungen zur Erde und zu den Sternen verschieden sind.

Das Sternenlicht gelangt durch das Fenster 6 vorbei an dem kleinen Ablenkspiegel 3 auf die gemeinsame Optik 2 und wird auf die Bildaufnehmer 4 fokussiert. Das Erdlicht gelangt durch das Fenster 7 auf den Ablenkspiegel 3, der es auf die gemeinsame Optik 2 lenkt. Von der gemeinsamen Optik 2 wird es auf die Bildaufnehmer 4 fokussiert. Die Bildaufnehmer 4 sind in Bezug auf die gemeinsame Optik 2 in einer gemeinsamen Fokalebene nach einem bestimmten Muster angeordnet. Figur 3 zeigt beispielsweise eine mögliche Anordnung von vier Bildaufnehmern, mit der die Abdeckung eines großen Sehfeldes mit einer minimalen Anzahl von Bildpunkten gegeben ist. Als Bildaufnehmer können beispielsweise die bekannten CCD-Bauelemente Verwendung finden, es sind aber auch andere Bauelemente, wie z. B. CMOS-Bildaufnehmer einsetzbar.

Bei der Apertur für die Erdbeobachtung handelt es sich um eine kleine Apertur, die vorteilhaft störendes Streulicht der Erde während der Beobachtung von schwach leuchtenden Sternen vermeidet sowie intensives Sonnenlicht dämpft, das manchmal auftritt, wenn die Sonne im Strahlengang zur Erde auftaucht. Das Bild der Erde durch das Fenster 7 und die Bilder der Sterne durch Fenster 6 überlagern sich auf den Bildaufnehmern.

Das Auswertesystem des kombinierten Erd-Stersensorsystemes 1 kann die Trennung von Erd- und Sternbild z. B. in folgender Weise vornehmen: der Erdrand im Bild wird grob, d.h. nicht subpixelgenau bestimmt, dann wird das Bild der Sterne, die deutlich außerhalb der Erdscheibe liegen, ausgewertet; die Sterne werden dazu mit der Sternenkarte verglichen; in der Sternenkarte werden die Sterne bestimmt, deren Bild zu nahe am Erdrand liegt, z. B. bis 3 Pixel, und die daher eine genaue Lokalisierung stören würden; der Erdrand wird dann subpixelgenau lokalisiert, wobei Pixel nicht berücksichtigt werden, die zu nahe an störenden Sternen liegen.

Ist der Unterschied der Aperturen groß genug, so stören die Sterne nicht, die durch die Erdapertur beobachtbar sind; ihr Licht wird von der kleineren Apertur zu stark gedämpft. Sonne und Mond müssen allerdings berücksichtigt werden, lassen sich aber durch ihre Flächenausdehnung auf einfache Weise von Sternen unterscheiden.

Alternativ zu dem System mit einer gemeinsamen Optik zeigt Figur 2 ein System mit getrennten Optiken für die Erd- und Sternbeobachtung. Das kombinierte Erd-Sternsensorsystem 1 besteht in diesem Fall aus einem halbdurchlässigen Strahlteiler 8, einer Optik 9 für die Sternbeobachtung, einer Optik 10 mit ggf. einem vorgeschaltetem Ablenkspiegel 11 für die Erdbeobachtung, aus den Fenstern 6 und 7, sowie aus den Bildaufnehmern 4.

Die Optik 10 für die Erdbeobachtung ist direkt im Fenster 7 eingesetzt und bildet die - ggf. über einen äußeren Ablenkspiegel 11 - empfangene Erdstrahlung über den halbdurchlässigen Strahlteiler 8 auf den Bildaufnehmer 4 ab. Die Optik 9 bildet das durch das Fenster 6 empfangene Sternenlicht über den Strahlteiler 8 auf die Bildaufnehmer 4 ab. Figur 2 zeigt die Bildaufnehmer 4 in einer gemeinsamen Fokalebene zum Strahlteiler 8. Die beiden Sensoren können bezüglich ihrer optischen Merkmale zur Kompensation von Intensitätsunterschieden aber auch für unterschiedliche Brennweiten ausgelegt sein und zusätzliche Dämpfungsfilter im Strahlengang aufweisen.

Wie im zu Figur 1 beschriebenen System ist die Apertur für die Erdbeobachtung gedämpft und kleiner als die Apertur für die Sternenbeobachtung, und die Beobachtungsrichtungen zur Erde und zu den Sternen sind verschieden.

Auch durch geeignete Steuerung der Belichtungs- bzw. Integrationszeit kann die unterschiedliche Helligkeit von Sternen und Erde ausgeglichen werden. Dazu wird im Betrieb abwechselnd ein Frame lang und ein Frame kurz belichtet. Mit dem jeweiligen Frame mit relativ langer Belichtungszeit, z. B. 0,1 sec., werden die Sterne optimal erfaßt, während mit dem darauffolgenden Frame mit relativ kurzer Belichtungszeit, z. B. 0,0001 sec., der Erdrand besonders genau erfaßt wird.

Zunächst wird die Sternposition in der Bildebene bestimmt. Anschließend erhält man durch Tracking der erfaßten Sterne die Bewegungen $(\frac{dx}{dt}, \frac{dy}{dt})^T$ der Sterne in der Bildebene. Danach werden die Drehraten $(\omega_x, \omega_y, \omega_z)^T$ durch Lösen zum Beispiel folgender Gleichungen bestimmt:

$$\frac{dx}{dt} = \frac{xy}{f}\omega_x + (-f - \frac{x^2}{f})\omega_y + y\,\omega_z$$

$$\frac{dy}{dt} = (f + \frac{y^2}{f})\omega_x - \frac{xy}{f}\omega_y - x\,\omega_z, \qquad (1)$$

wobei f die Brennweite des optischen Systems ist. Die Rotationsfreiheitsgrade des Raumflugkörpers können durch Verfolgen von mindestens 2 Sternen $(x_i, y_i)$ in der Bildebene bestimmt werden.

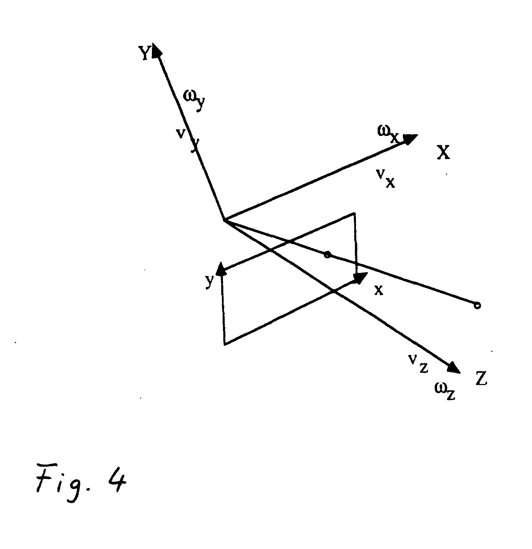

Zur Veranschaulichung der Gleichungen ist in Figur 4 die Bildebene x, y und ein Koordinatensystem gezeigt, wobei sich der Satellit in X-Richtung fortbewegt und die Z-Achse zum Erdmittelpunkt zeigt. Die Drehraten $\omega_x, \omega_y, \omega_z$, geben das Rollen, das Nicken und das Gieren des Satelliten bzw. Raumflugkörpers wieder.

Im nächsten Schritt wird der Erdrand subpixelgenau - nach entsprechender Segmentierung - bestimmt. Dazu wird ein bahnabhängiges Modell der Erde und der Erdatmosphäre an die Intensitätsverteilung in der Bildebene angefittet. Dabei ist zu berücksichtigen, daß das Bild zur subpixelgenauen Sternpositionsbestimmung bereits defokusiert ist (über 2-3 Pixel). Bei der subpixelgenauen Bestimmung erfolgt eine Interpolation zwischen den einzelnen Pixelwerten. Durch die Segmentierung, d. h. durch die Trennung des Bildes nach Erde und Stern, wird eine höhere Genauigkeit erzielt.

Falls die Erde als Ganzes oder als genügend gekrümmtes Kreissegment abgebildet wird, kann der Vektor zum Erdmittelpunkt geschätzt werden.

Nun wird mittels folgender Formel die Bahnbewegung $(v_x, v_y, v_z)^T$ des Satelliten aus der Bildbewegung des Erdrandes $(\frac{dx}{dt}, \frac{dy}{dt})^T$ ermittelt:

$$\frac{dx}{dt} = f/Z^* (-v_x + x\,v_z) + C_x$$

$$\frac{dy}{dt} = f/Z^* (v_y + y\,v_z) + C_y \qquad (2)$$

Hierbei ist Z die in diesem Fall konstante Entfernung zum Erdhorizont. $C_x$, $C_y$ sind Konstanten, die von den bekannten Drehraten wie folgt abhängen:

$$C_x = \frac{xy}{f}\omega_x + (-f - \frac{x^2}{f})\omega_y + y\,\omega_z$$

$$C_y = (f + \frac{y^2}{f})\omega_x - \frac{xy}{f}\omega_y - x\,\omega_z. \qquad (3)$$

Wieder genügen zwei Punkte $(x, y)^T$ des Erdrandes, um die Bahnkomponenten zu schätzen. Falls Z unbekannt ist, können die Geschwindigkeiten nur bis auf einen konstanten Faktor bestimmt werden. Bildet sich der Erdrand nur als lineares oder quasilineares Element ab, so enthält (2) nur eine Messung für die Unbekannten $v_x$, $v_y$, $v_z$.

Eine gleichzeitige Bahn- und Lagebestimmung kann also z. B. durch folgende Schritte erfolgen:

a) Bestimmung der Sternposition in der Fokalebene mittels einem subpixelgenauen Verfahren wie z. B. Centroiding;
b) Bestimmung der Drehraten durch Tracking der Flächenschwerpunkte der Sterne und Invertieren der Abbildungsgleichungen;
c) Bestimmung des Erdrandes durch modellgestützte subpixelgenaue Bildverarbeitungsverfahren;
d) Schätzen des Erdmittelpunktes aus dem Bild des Erdrandes, soweit möglich;
e) Modellbasiertes Tracking des Erdrandes, um zusätzliche Freiheitsgrade zu gewinnen

**Patentansprüche**

**1.** Kombiniertes Erd-Sternsensorsystem zur dreiachsigen Lagebestimmung und zur Bahnbestimmung von Satelliten im Weltraum, wobei das kombinierte Erd-Sternsensorsystem (1) getrennte Aperturen mit unterschiedlichen Beobachtungsrichtungen und gemeinsame Bildaufnehmer (4) für den Erd- und den Stemsensor aufweist, **dadurch gekennzeichnet, daß** das Sensorsystem Mittel zur variablen Steuerung der Belichtungszeit in Abhängigkeit von der Helligkeit der Erde und der zu beobachtenden Sterne aufweist.

**2.** Sensorsystem nach Anspruch 1, **dadurch gekennzeichnet, daß** das Erd-Sternsensorsystem (1) eine gemeinsame Optik (2) für die Erd- und Stembeobachtung und einen Ablenkspiegel (3) zur Umlenkung des seitlich eintretenden Erdlichtes auf die gemeinsame Optik (2) aufweist.

**3.** Sensorsystem nach Anspruch 1, **dadurch gekennzeichnet, daß** das Erd-Sternsensorsystem (1) eine Optik (9) für die Stembeobachtung, eine Optik (10) für die Erdbeobachtung und einen halbdurchlässigen Strahlenteiler (8) zur Umlenkung des seitlich eintretenden Erdlichtes und Transferierung des in Längsrichtung eintretenden Sternenlichtes auf die Bildaufnehmer (4) aufweist.

**4.** Sensorsystem nach einem der Ansprüche 1 bis 3, **dadurch gekennzeichnet, daß** die Apertur für das Erdlicht erheblich kleiner ist als die Apertur für das Sternenlicht.

**5.** Verfahren zur gleichzeitigen Bahn- und Lagebestimmung eines Raumflugkörpers, **gekennzeichnet durch** die Schritte:

- Gleichzeitiges Abbilden von Sternen und Erdrand in einer Fokalebene eines Sensorsystems,
- Bestimmen der Sternposition in der Fokalebene,
- Bestimmen des Erdrandes **durch** Bildverarbeitung,
- Bestimmen von Drehraten des Sensorsystems aus der Bewegung des Sternbildes in der Fokalebene,
- Berechnen von Bahn und/oder Lage eines Raumflugkörpers, der das Sensorsystem trägt,

wobei die Belichtungs- oder Ingegrationszeit des Sensorsystems wechselweise an die unterschiedlichen Helligkeiten von Sternen und Erde angepasst wird.

**6.** Verfahren nach Anspruch 5, **dadurch gekennzeichnet, daß** das Auswertesystem des Sensorsystems mit Hilfe eines Sternkatalogs oder ähnlichem Vorwissen diejenigen Stellen im Bild außer acht läßt, an denen sich das Bild des Erdrandes mit Bildern von Sternen überlagert und damit Störeinflüsse auf die Genauigkeit der Erdrandbestimmung im Bild eliminiert.

**7.** Verfahren nach Anspruch 5 oder 6, weiterhin **gekennzeichnet durch** modellbasiertes Tracking des Erdrandes.

**8.** Verfahren nach einem der Ansprüche 5 bis 7, **dadurch gekennzeichnet, daß** ein langwelliger Teil der Strahlung herausgefiltert und zur Bestimmung des Erdrandes verwendet wird.

**9.** Verfahren nach einem der Ansprüche 5 bis 8, **dadurch gekennzeichnet, daß** der Erdrand durch Anfitten von Erdmodellen bestimmt wird.

**Claims**

**1.** Combined Earth-star sensor system for the triaxial position determination and for the orbit determination of satellites in space, wherein the combined Earth-star sensor system (1) has separate apertures having different observation directions and common image recorders (4) for the Earth sensor and the star sensor, **characterized in that** the sensor system has means for the variable control of the exposure time as a function of the brightness of the Earth and of the stars to be observed.

**2.** Sensor system according to Claim 1, **characterized in that** the Earth-star sensor system (1) has a common lens (2) for Earth and star observation and a deflecting mirror (3) for deflecting the laterally entering Earthlight onto the common lens (2).

**3.** Sensor system according to Claim 1, **characterized in that** the Earth-star sensor system (1) has a lens (9) for star observation, a lens (10) for Earth observation and a semitransparent beam divider (8) for deflecting the laterally entering Earthlight and transferring the starlight entering in the longitudinal direction onto the image recorders (4).

**4.** Sensor system according to any one of Claims 1 to 3, **characterized in that** the aperture for the Earthlight is appreciably smaller than the aperture for the starlight.

**5.** Method for the simultaneous orbit and position determination of a space vehicle, **characterized by** the steps of:

- simultaneous imaging of stars and Earth rim on a focal plane of a sensor system,
- determination of the star position in the focal plane,
- determination of the Earth rim by image processing,
- determination of the rates of rotation of the sensor system from the movement of the star image in the focal plane,
- calculation of orbit and/or position of a space vehicle carrying the sensor system,

wherein the exposure time or integration time of the sensor system is alternately matched to the different brightnesses of stars and Earth.

**6.** Method according to Claim 5, **characterized in that** the evaluation system of the sensor system ignores, with the aid of a star catalogue or similar previous knowledge, those points in the image at which the image of the Earth rim is overlapped by images of stars and consequently eliminates effects that disturb the precision of the determination of the Earth rim.

**7.** Method according to Claim 5 or 6, further **characterized by** model-based tracking of the Earth rim.

**8.** Method according to any one of Claims 5 to 7, **characterized in that** a long-wave part of the radiation is filtered out and is used to determine the Earth rim.

**9.** Method according to any one of Claims 5 to 8, **characterized in that** the Earth rim is determined by fitting on Earth models.

**Revendications**

**1.** Système de capteurs terrestre - stellaire combiné pour la détermination de position triaxiale et la détermination de trajectoire de satellites dans l'espace, le système de capteurs terrestre - stellaire (1) combiné présentant des ouvertures séparées avec des directions d'observation différentes et des caméras communes (4) pour le capteur terrestre et le capteur stellaire, **caractérisé en ce que** le système de capteurs présente des moyens pour la commande variable de la durée d'exposition en fonction de la luminosité de la terre et des étoiles à observer.

**2.** Système de capteurs suivant la revendication 1, **caractérisé en ce que** le système de capteurs terrestre - stellaire (1) présente une optique commune (2) pour l'observation de la terre et des étoiles et un miroir de déviation (3) pour dévier la lumière de la terre incidente latéralement sur l'optique commune (2).

**3.** Système de capteurs suivant la revendication 1, **caractérisé en ce que** le système de capteurs terrestre - stellaire (1) présente une optique (9) pour l'observation des étoiles, une optique (10) pour l'observation de la terre et un séparateur de faisceaux (8) semi-perméable pour dévier la lumière de la terre incidente latéralement et transférer la lumière stellaire incidente dans la direction longitudinale sur les caméras (4).

**4.** Système de capteurs suivant l'une des revendications 1 à 3, **caractérisé en ce que** l'ouverture pour la lumière terrestre est considérablement plus faible que l'ouverture pour la lumière stellaire.

**5.** Procédé de détermination simultanée de la trajectoire et de la position d'un engin spatial, **caractérisé par** les étapes :

- reproduction simultanée des étoiles et du bord de la terre dans un plan focal d'un système de capteurs,
- détermination de la position des étoiles dans le plan focal,
- détermination du bord de la terre par traitement d'images,
- détermination des vitesses de rotation du système de capteurs à partir du déplacement de l'image des étoiles dans le plan focal,
- calcul de la trajectoire et/ou de la position d'un engin spatial qui supporte le système de capteurs,

la durée d'exposition ou d'intégration du système de capteurs étant adaptée alternativement aux luminosités différentes des étoiles et de la terre.

**6.** Procédé suivant la revendication 5, **caractérisé en ce que** le système d'évaluation du système de capteurs néglige à l'aide d'un catalogue stellaire ou de connaissances analogues les points de l'image où l'image du bord de la terre se superpose aux images des étoiles et élimine ainsi des influences perturbatrices sur la précision de la détermination du bord de la terre dans l'image.

**7.** Procédé suivant l'une des revendications 5 et 6, **caractérisé en outre par** la poursuite du bord de la terre sur la base de modèles.

**8.** Procédé suivant l'une des revendications 5 à 7, **caractérisé en ce qu'**une partie de grande longueur d'onde du rayonnement est filtrée et utilisée pour la détermination du bord de la terre.

**9.** Procédé suivant l'une des revendications 5 à 8, **caractérisé en ce que** le bord de la terre est déterminé par adaptation de modèles terrestres.

**Fig.1**

Fig. 2

4

4

4

4

Fig. 3

Fig. 4